# EUROPEAN PATENT APPLICATION

(11) **EP 4 279 417 A1**
(43) Date of publication of application: **22.11.2023**
(21) Application number: 22174530.0
(22) Date of filing: 20.05.2022
(51) Int. Cl.: B65G 1/02, B65G 1/04, B65G 1/14, A47B 87/00, A47B 96/07

(54) **RACK FOR TRANSPORTING AND/OR STORING BUILDING ELEMENTS WHICH ARE USED FOR BUILDING ROTOR BLADES OF WIND TURBINES**

(71) Applicant: Siemens Gamesa Renewable Energy A/S, 7330 Brande (DK)
(72) Inventor: Jensen, Rasmus Juulsgaard, 9220 Aalborg (DK); Nielsen, Mogens, 9220 Aalborg (DK)
(74) Representative: SGRE-Association

(57) **Abstract**

Rack for transporting and/or storing building elements (2) which are used for building rotor blades of wind turbines, wherein the rack (1) comprises a holding structure (3) and several holding arms (6) which are attached or attachable to the holding structure (3), wherein the holding arms (6) are arranged offset in several rows when they are in a holding position in which they project from the holding structure (3) in a storage space (8) of the rack (1), wherein the holding arms (6) arranged in each row build a respective reception plane (7) for receiving at least one building element (2) extending over at least several of the holding arms (6) of this row, wherein at least two vertically staggered reception planes (7) are built, wherein at least one of the holding arms (6) which build an upper reception plane (7) is movable from the holding position into a non-holding position, in which the respective holding arm (6) is moved out of the storage space (8) above the reception plane (7) below the upper reception plane (7), and vice versa.

## Description

The invention relates to a rack for transporting and/or storing building elements which are used for building rotor blades of wind turbines.

Wind turbines usually comprise a rotor with a plurality of rotor blades, generally for converting wind energy into electrical energy by means of a generator. Due to the enormous size of the wind turbine blades, their manufacturing is a major challenge for manufacturers of wind turbines. Normally, the wind turbine blades are fabricated from fiber-reinforced material involving the handling of large parts like fiber mats, in particular for casting the shell of the wind turbine blade. The wind turbine blade may be assembled using a plurality of such fiber mats as well as other components, for instance rigid core elements. In addition or alternatively, also precasted blade segments may be used.

One technology for facilitating the fabrication of wind turbine blades is the usage of preform building elements, or preforms, respectively, which are preformed smaller blade part or blade segments which are used in particular for building the respective blade shell. These preform building elements are prefabricated separately and then arranged and aligned in a blade mold according to the requested geometry of the blade to be manufactured. The preform building elements may be arranged in the blade mold for casting an entire rotor blade or a larger rotor blade part.

The preform building elements comprise for instance a plurality of fiber mats and/or core materials, which are locally attached to each other in order to allow for their mutual handling facilitating the arrangement of the components in the blade mold. The core material may be for instance a flexible or rigid balsa wood plate. A flexible balsa wood plate may be knife-cut or saw-cut into small pieces that may be held together by one or more fiberglass nets, to which the balsa pieces are glued. When casting the wind turbine blade, the preform building elements can be soaked with resin forming for instance the shell of the rotor blade to be manufactured. Therefore, the components of the preform building elements are only locally adhered and/or held together using a binding agent dissolvable in the resin, so that the resin infusion, in particular into fiber-based components of the preform building element, is not obstructed during the casting of the blade.

The preform building elements may be fabricated in a preform mold used for arranging and locally attaching the components of the preform building element. It is possible that the preform building elements are covered for instance under a vacuum foil and/or in a vacuum bag to stabilize the stack of materials that constitutes the preform building element.

From the preform mold, the preform building element has to be lifted, e.g., by a lifting yoke which hangs on a rope of a crane, and transported to the blade mold or to an intermediate storage position. For transporting a building element like a preform building element, a carry frame or hand cart may be used.

It is an object of the present invention to provide an enhanced concept for transporting and/or storing respective building elements.

According to the invention, this problem is solved by a rack as initially described, wherein the rack comprises a holding structure and several holding arms which are attached or attachable to the holding structure, wherein the holding arms are arranged offset in several rows when they are in a holding position in which they project from the holding structure in a storage space of the rack, wherein the holding arms arranged in each row build a respective reception plane for receiving at least one building element extending over at least several of the holding arms of this row, wherein at least two vertically staggered reception planes are built, wherein at least one of the holding arms which build an upper reception plane is movable from the holding position into a non-holding position, in which the respective holding arm is moved out of the storage space above the reception plane below the upper reception plane, and vice versa.

The invention is based on the idea that the reception planes of the rack can be used for storing several building elements stacked on top each other. Since the holding arms are movable into the non-holding position where they are not located within the storage space, the reception plane below these holding arms is freely accessible from above for a hoisting or lifting means like a crane to put a building element to this reception plane or to lift a building element from this reception plane.

Hence, for loading the rack, all of the holding arms except for the holding arms building the lowest reception plane can be in the non-holding position. A building element or several building elements can be put onto the lowest reception plane from above. After this, the holding arms building the reception plane above the lowest reception plane can be moved into the holding position. A further building element or further building elements can be put onto the second lowest reception plane from above. This can be continued until the rack is fully loaded. To unload the rack, this process can be carried out in reverse order. Beside loading the rack from above, it can also be loaded or unloaded from the side, e.g., by a forklift, while the holding arms are in the holding position.

Hence, the reception planes cause the positive effect that the rack according to the present invention can be used to transport or to store several building elements at the same time while the movability of the holding arms allow an easy way to load and unload the rack from above.

The rack can comprise a rectangular shape, i.e., the shape of an elongated cuboid. The holding structure can extend along a vertical side of the cuboid. In general, the holding structure can extend along a vertical plane on which the holding arms are arranged or attached. The storage space can be the space beside the holding structure. The holding arms which are in the holding position and, hence, the building elements stored in the rack are located within the storage space.

The holding arms might have an elongated structure, following a straight or a bent line. The holding arms which are in the holding position can protrude from the holding structure, preferably perpendicular. The holding arms in the non-holding position can be located within the holding structure or the plane constituted by the holding structure. The holding arms can be made of metal, particularly steel, or any other suitable material like fiber reinforced plastics or the like.

Particularly related to the holding structure or to the plane constituted by the holding structure, the holding arms are arranged in several rows. Each of the rows constitute one of the reception planes for the building elements. Each row or reception plane, respectively, is realized by at least two holding arms. Hence, the building element which is stored in a certain reception plane can lie on at least two of the holding arms which constitute this reception plane.

Preferably, the holding arms are arranged in several horizontal rows. Hence, the respective rows can be shaped straight and preferably horizontal. However, if the row comprises at least three holding arms which are arranged at different vertical positions, this row can also be bent or curved. Such rows are advantageous if the building element to be stored in this reception plane is also bent. In this case, the shape of the row or reception plane can correspond to or equal the shape of the building element which is supposed to be stored in this reception plane.

Particularly related to the holding structure or to the plane constituted by the holding structure, the holding arms can be arranged in several vertical rows when they are in the holding position. In this embodiment, the holding arms can be attached to vertical beams of the holding structure.

At least one of the holding arms can be movable from the holding position into the non-holding position and vice versa by pivoting it around a, particularly mainly vertical, axis. The holding arm can be attached to the holding structure by a hinge.

At least one of the holding arms can comprise at least two different, particularly differently shaped, surfaces, wherein this holding arm is movable from a first position into a second position by turning this holding arm around a, particularly horizontal, axis, wherein the first surface constitutes a support area for the building elements when this holding arm is in the first position and the second surface constitutes the support area when this holding arm is in the second position. The support area is the part of the holding arm on which the building element lies when it is stored in the rack. The first surface can point upwards and the second surface downwards if the holding arm is in the first position and the first surface can point downwards and the second surface upwards if the holding arm is in the second position. The first and second surface can be bent such that one of these surfaces constitutes a concave and the other of these surfaces a convex support area. Particularly, the holding arm has to be detached from the holding structure for moving it from the first into the second position and vice versa.

Preferably, several exchangeable holding arms, particularly comprising differently shaped support areas for the building elements, are provided, wherein the holding arms are detachably attachable to the holding structure. In this embodiment, the rack constitutes a kit comprising the holding structure and several different holding arms which can be attached to and detached from the support structure. Particularly, the shapes of the holding arms which are currently attached to the holding structure may correspond to the shape of the currently stored or transported building elements.

Beside the shape of the reception plane, the number of holding arms can vary, particularly depending on the weight, length, thickness, and/or geometry of the building elements which are supposed to be stored in the rack. Particularly, if the building element is of a very stiff nature compared to a less stiffer building element, less holding arms can be required to reliably store this building element.

The holding arms which are detachable form the holding structure can comprise a mounting insert each, wherein the holding structure comprises sockets, wherein each of the mounting inserts can be inserted into one of the sockets for attaching the holding arm to the holding structure. The socket can comprise an upwards pointing opening such that the mounting insert can be inserted into the socket from above.

The socket or its receiving space, respectively, and the mounting insert can be shaped rectangularly. The mounting insert can be a mounting plate. The socket can be pivotally attached to the holding structure, e.g., by a hinge, such that the holding arm can be moved from the holding position into the non-holding position and vice versa by pivoting the socket together with the holding arm.

Alternatively, the socket or its receiving space can be cylindrical and the mounting insert can be a cylindrical stud, wherein the socket and the stud constitute the hinge for moving the holding arm from the holding position into the non-holding position and vice versa.

The holding arm can consist of one element or component or of several elements or components. Preferably, at least one of the holding arms comprises a mounting device and a supporting device which is attached to or attachable to the mounting device and which constitutes a flexible support area for the building elements. In this embodiment, the supporting device constitutes an elastic part of the holding arm such that differently shaped building elements can be placed in the respective reception plane without the need of exchanging the respective holding arms. The mounting device can be a frame, particularly made of steel.

At least a part of the supporting device can be made of an elastic material, e.g., polyurethane foam. Alternatively, the supporting device can comprise a, particularly sagging, carrying strap or carrying wire. The strap can be sagging and/or elastic. The strap can be made of a woven material. The strap or the wire can consist of polyester. The strap or wire can be attached to the mounting device on its longitudinal ends.

Preferably, at least one of the holding arms comprises the or a mounting device, wherein several different, particularly differently shaped, supporting devices are provided, which are detachably connectable with the mounting device. In this embodiment, the mounting device and the supporting devices constitute a kit for building differently shaped holding arms. The supporting devices can be insets which are insertable into the respective mounting device or holding frame, respectively, particularly from above.

At least one of the holding arms or the or a mounting device of at least one of the holding arms can be adjustable in length. The respective holding arm or the mounting device of the respective holding arm can be telescopically extendable. Hence, the holding arm can be made wider or narrower as needed. Particularly different supporting devices with different lengths can be provided, wherein the length of the mounting device can be adapted to the length of the supporting device which is currently supposed to be used.

If the supporting device is the or a carrying strap, the strap can be elastic such that it can be used for different lengths of the holding arm or mounting device, respectively. Additionally or alternatively, a sagging part of the carrying strap which constitutes the support area can be extended or made shorter by an attaching or clamping device for attaching the carrying strap to the mounting device and by adjusting the length of the sagging part after opening this device.

Particularly, at least one of the holding arms can comprise at least one roller and/or at least one ball which constitutes a part of the support area for the building elements. The wheel-like roller or ball allows it to relocate the building element which is currently laying on the respective holding arm. Particularly, the building element can be inserted into the rack from the side with the help of the roller and/or ball. The roller can be located within a recess of the support area. If the carrying wire and several balls are provided, the balls can be threaded on the wire to constitute a pearl necklace-like structure.

The holding structure can be a holding frame with several vertical beams. The vertical beams can be connected to each other by several horizontal beams. The holding structure can comprise a lattice- or framework like structure. The, particularly vertical and horizontal, beams can define the vertical plane which is located beside the storage space. The beams can be made of steel or another suitable material comprising a sufficient mechanical stability. Preferably, the holding arms are attached or attachable to the vertical beams, e.g., by fixing means, e.g., by clamping means.

The vertical position of at least one of the holding arms can be adjustable. Hence the vertical height and/or the shape of the reception planes can be adjusted. The respective holding arm can be attached or attachable on one of the vertical beams by the vertically shiftable fixing or clamping means.

The storage space can be located between two opposing holding structures, wherein holding arms are attached on a first holding structure and holding arms are attached on a second holding structure. The holding structures can constitute a, particularly vertical, plane each which preferably run parallel to each other. When the holding arms are in the holding position, they can oppose each other and point towards each other. Hence, the support areas of two opposing holding arms continue or extend each other. Alternatively, the holding arms can be offset to each other when they are in the holding position.

It is also possible that the holding arms on the first holding structure differ from the holding arms attached on the second holding structure particularly with respect to the geometric shape. Hence, either the holding arms of the first holding structure or the holding arms of the second holding structure can be in the holding position and realizing differently shaped reception planes depending on the shape of the building element which is currently supposed to be stored. E.g., the holding arms of the first holding structure can realize a concave and the holding arms of the second holding structure a convex reception plane.

Since one of the main purposes of the rack might be moving the building element from the preform mold to the blade mold, the rack can comprise at least one transportation means for relocating the rack. The transportation means can be or can comprise several wheels for moving the rack on a ground. Additionally or alternatively, the transportation means is or comprises a hoisting means, particularly a hook or a lug, adapted to be connected with a rope of a crane. Additionally or alternatively, the transportation means is or comprises a fork socket adapted to receive a fork of a forklift.

The object of the invention is furthermore solved by a modular rack comprising several racks according to the description above, wherein two laterally adjacent racks are releasably connectable with each other by connection means. The connection means can be lateral, particularly flange-like, connection plates which can be attached to each other, e.g., by screws or the like.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a perspective view on a first embodiment of the rack according to the invention,
- Fig. 2: two detailed views on the rack of fig. 1, wherein on the left hand side a holding arm is in a first position and on the right hand side the holding arm is in a second position,
- Fig. 3: a detailed view of the rack of fig. 1 regarding the attachability of the holding arm,
- Fig. 4: a perspective view on a second embodiment of the rack according to the invention,
- Fig. 5: a detailed view of the rack of fig. 4 regarding the attachability of the holding arm,
- Fig. 6: a perspective view on a kit for realizing the hold-ing arms of the rack of fig. 4, while the holding arm is assembled,
- Fig. 7: a perspective view on the holding arm of a third embodiment of the rack according to the invention while being assembled,
- Fig. 8: a perspective view on the holding arm of a fourth embodiment of the rack according to the invention while being assembled,
- Fig. 9: a perspective view on the holding arm of a fifth embodiment of the rack according to the invention which is attached to a holding structure of the rack,
- Fig. 10: a side view on the holding arm and the holding structure of the rack of fig. 9,
- Fig. 11: a perspective view on a sixth embodiment of the rack according to the invention while being loaded,
- Fig. 12: a perspective view on a seventh embodiment of the rack according to the invention while being loaded,
- Fig. 13: a perspective view on an eighth embodiment of the rack according to the invention while being loaded, and
- Fig. 14: a perspective view on an embodiment of a modular rack according to the invention.

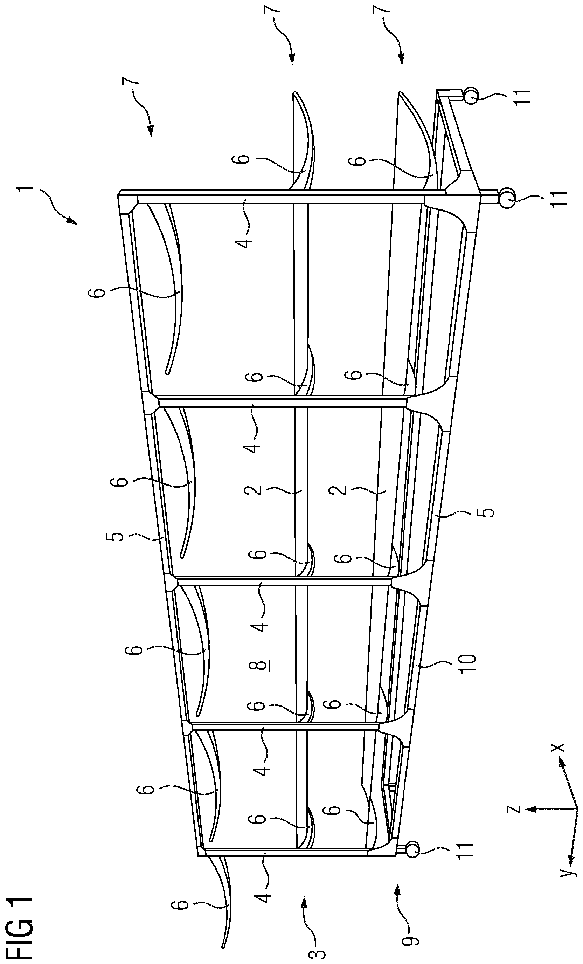

Fig. 1 shows an embodiment of a rack 1 according to the present invention. The rack 1 is adapted for storing and transporting building elements 2 used for building a rotor blade of a wind turbine. The rack comprises a holding structure 3 which is a holding frame with several vertical beams 4 and horizontal beams 5. For a better orientation, the figures show a coordinate system, wherein an x-axis runs along a short edge and a y-axis along a long edge of the rack 1. A z-axis points upwards.

The rack 1 comprises holding arms 6 which are attached to the vertical beams 4 of the holding structure 3. The holding arms 6 are arranged offset in several rows, wherein each row build a respective reception plane 7 for receiving at least one building element 2. Regarding the rack 1 in fig. 1, three reception planes 7 are realized, wherein each reception plane 7 is constituted by five holding arms 6. The resulting three reception planes 7 are vertically staggered.

The holding arms 6 of the upper and the middle reception plane 7 are movable from a holding position into a non-holding position. In the holding position, the holding arms 6 perpendicularly project from the holding structure 3 into a storage space 8 of the rack 1 and constitute the respective reception plane 7. In the non-holding position, the holding arm 6 is moved out of the storage space 8 such that the reception plane 7 below this holding arm 6 is accessible from above. Exemplarily and since there is no reception plane 7 beneath the holding arms 6 of the lowest reception plane 7, these holding arms 6 are not movable between the holding- and non-holding position but permanently in the holding position.

Regarding the state of the rack 1 which is shown in fig. 1, the five holding arms 6 which constitute the upper reception plane 7 are currently in the non-holding position and the five holding arms 6 which constitute the middle reception plane 7 in the holding position. Hence, the building element 2 which is stored in the middle reception plane 7 can be lifted by a hoisting means like a crane or the like, because the five holding arms 6 which constitute the upper reception plane 7 currently release the middle reception plane 7.

As can be seen also in fig. 1, the holding arms 6 are arranged in several horizontal rows and several vertical rows when they are in the holding position. However, it is also possible to realize bent or curved rows, particularly if building elements 2 with respective shapes are supposed to be stored in the rack 1.

Besides storing building elements 2 in the rack 1, the rack 1 can be used to move or transport building elements 2. For this, the rack 1 comprises a transportation means 9 for relocating the rack. The transportation means 9 is a horizontal base frame 10 with several wheels 11. Although it is not shown in the figures, the rack 1 also comprises other transportation means 9 like a hoisting means, particularly hooks or lugs, which can be connected with lugs or hooks of a rope of a crane. Another transportation means 9 of the rack 1 is a fork socket adapted to receive a fork of a forklift. Hence, the rack 1 can be moved on the ground by the wheels 11 or the forklift, and it can be hoisted or lifted by a crane.

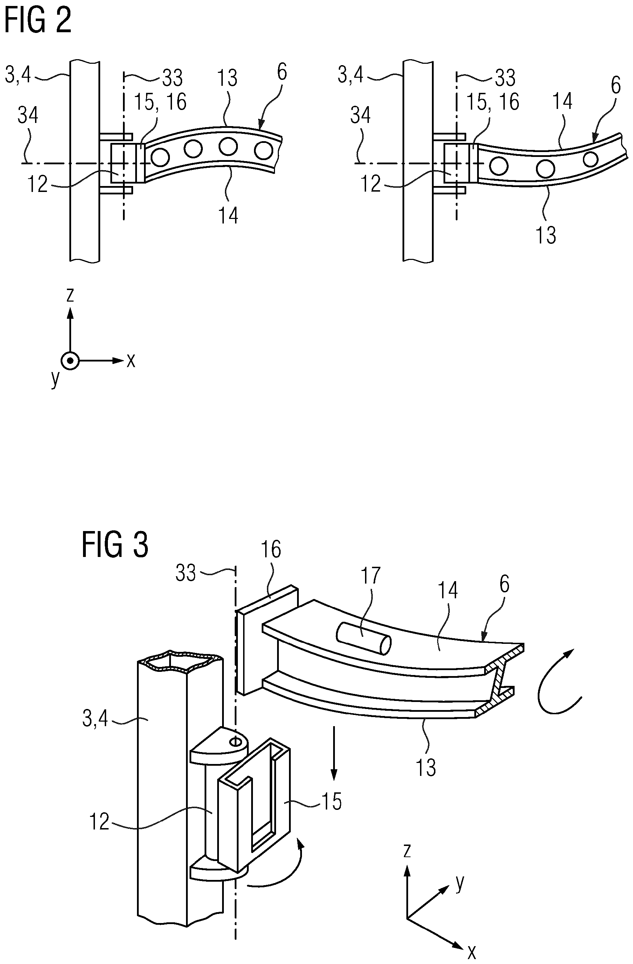

Now referring to fig. 2, the holding arms 6 are movable from the holding position into the non-holding position and vice versa by pivoting it around a vertical axis 33. For this, a hinge 12 is provided.

Another aspect which can be seen from fig. 2 is that the holding arms 6 comprise two differently shaped surfaces 13, 14, wherein the holding arm 6 is movable from a first position (see left hand side in fig. 2) into a second position (see right hand side of fig. 2) by turning the holding arm 6 around a horizontal axis 34. In the first position, the first surface 13 constitutes a support area for the building element 2 and in the second position the second surface 14 constitutes the respective support area. The support area is the area of the holding arm 6 which gets into contact with the building element 2 which is laying in the respective reception plane 7. Thus, the first surface 13 points or is directed upwards when the holding arm is in the first position and the second surface 14 points or is directed upwards when the holding arm 6 is in the second position. The surfaces 13, 14 are bent such that the respective holding arms 6 constitute a concave or a convex support area. Referring to fig. 1, all holding arms 6 are in the second position.

Now referring to fig. 3, moving the holding arm 6 from the first into the second position or vice versa is performed by detaching the holding arm 6 from the holding structure 3, turning it around its longitudinal axis and attaching it again to the holding structure 3. For this, a socket 15 is provided which is pivotally attached to the holding structure 3 by the hinge 12. Hence, the socket 15 can be turned around the vertical axis 33 together with the holding arm 6. Furthermore, a mounting insert 16 of the holding arm 6 is provided, wherein the mounting insert 16 can be inserted into the socket 15 to attach the holding arm 6 to the holding structure 3. The receiving space of the socket 15 and the mounting insert 16 are rectangular. Alternatively, the receiving space of the socket 15 and the mounting insert 16 can be cylindrical each such that the components 15, 16 realizes the hinge 12 allowing the holding arm 6 to be pivoted around the vertical axis 33.

Another aspect of the rack 1 is that several exchangeable holding arms 6 with differently shaped support areas for differently shaped building elements 2 are provided. Hence, the socket 15 and mounting insert 16 does not only allow the holding arm 6 to be moved from the first into the second position but also to exchange the respective holding arms 6. Particularly, the different holding arms 6 comprise different lengths and radii of curvature. Hence, the holding arms 6 and the holding structure 3 constitute a kit for building the rack 1 with differently shaped reception planes 7.

Referring again to fig. 3, the holding arm 6 comprises rollers 17 on the surfaces 13, 14, wherein the rollers 17 constitute a part of the support area for the building elements 2. The rollers can be turned around the x-axis such that the rack 1 can be loaded with building elements 2 from the front side by moving them along the y-axis into the rack 1.

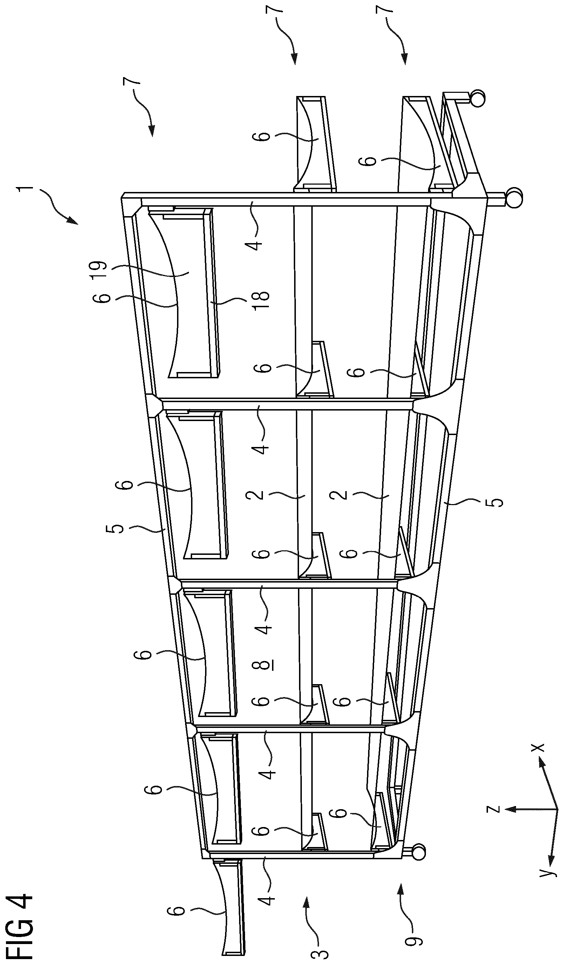

Now referring to fig. 4, a second embodiment of the rack 1 will be described. While the holding arms 6 of the first embodiment of the rack 1 are constituted by a single piece, the holding arms 6 of the rack 1 of the second embodiment comprise a mounting device 18 and a supporting device 19 which is attachable to the mounting device 18.

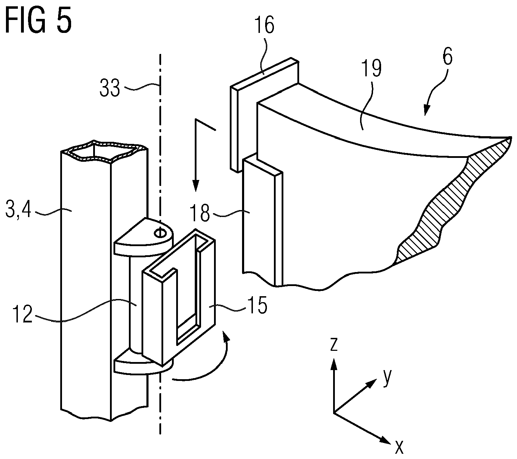

As can be seen from fig. 5, the concept for attaching the holding arms 6 to the holding structure 3 is the same as in the first embodiment of the rack 1, i.e., using the hinge 12 together with the socket 15 and the mounting insert 16 which is a part of the mounting device 18.

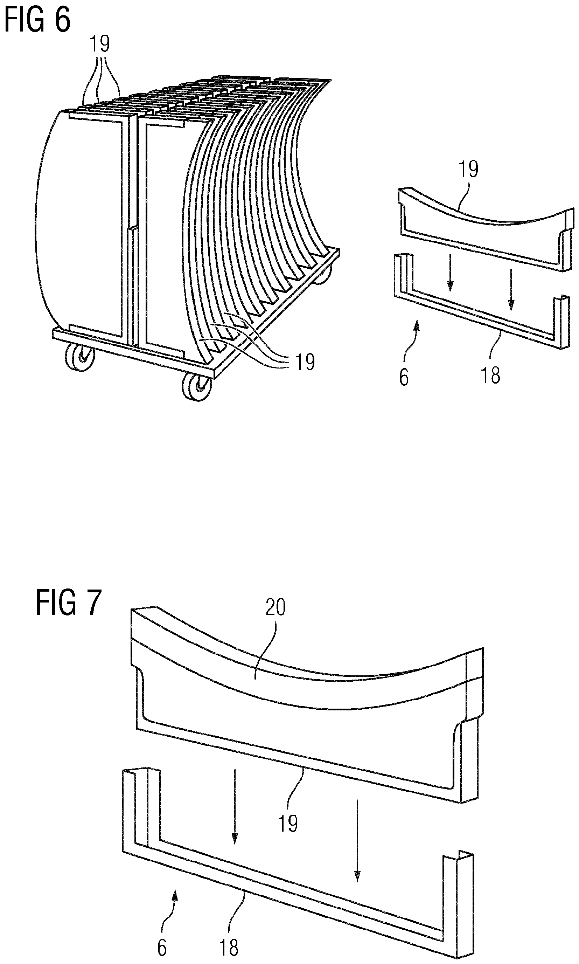

Now referring to fig. 6, there are several differently shaped supporting devices 19 (see fig. 6 left hand side) which are detachably connectable with the mounting device 18 (see fig. 6 right hand side). The supporting devices 19 comprise different support areas, e.g., for realizing convex and concave reception planes. The mounting device 18 is a holding frame made of steel and open towards the upper side such that each of the inset-like supporting devices 19 can be inserted into the mounting device 18 from above. The mounting devices 18, the supporting devices 19 and the holding structure 3 constitutes a kit for realizing the rack 1 with differently shaped reception planes 7.

Fig. 7 shows the holding arm 6 of a third embodiment of the rack 1 which is similar to the second embodiment. The holding arm 6 of this embodiment also comprises the mounting device 18 and the supporting devices 19 or insets, respectively. In contrast to the second embodiment, the supporting devices 19 comprise a flexible layer 20, particularly a foam rubber layer made of, e.g., polyurethane foam, which constitutes an elastic support area for the building elements 2. Although in the third embodiment also several supporting devices 19 are provided, the flexible layer 20 reduce the number of different supporting devices 19 which are required for different shaped building elements 2, since the geometry of these supporting devices 19 adjust with the geometry of the respective building element 2. Additionally, the support devices 19 with the soft foam layer 20 is not as heavy a supporting device 19 without the layer 20 which makes them easier to handle.

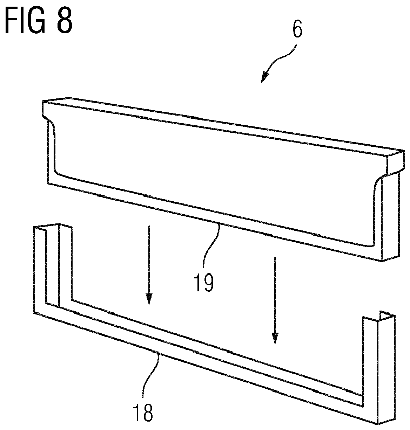

Fig. 8 shows the holding arm 6 of a rack 1 according to a fourth embodiment. Here, the supporting devices 19 are made of one piece of a flexible material like foam rubber, e.g., polyurethane foam. In this embodiment, the supporting device 19 in the frame or mounting device 18, respectively, automatically adapts to the geometry of the building element 2 placed thereon.

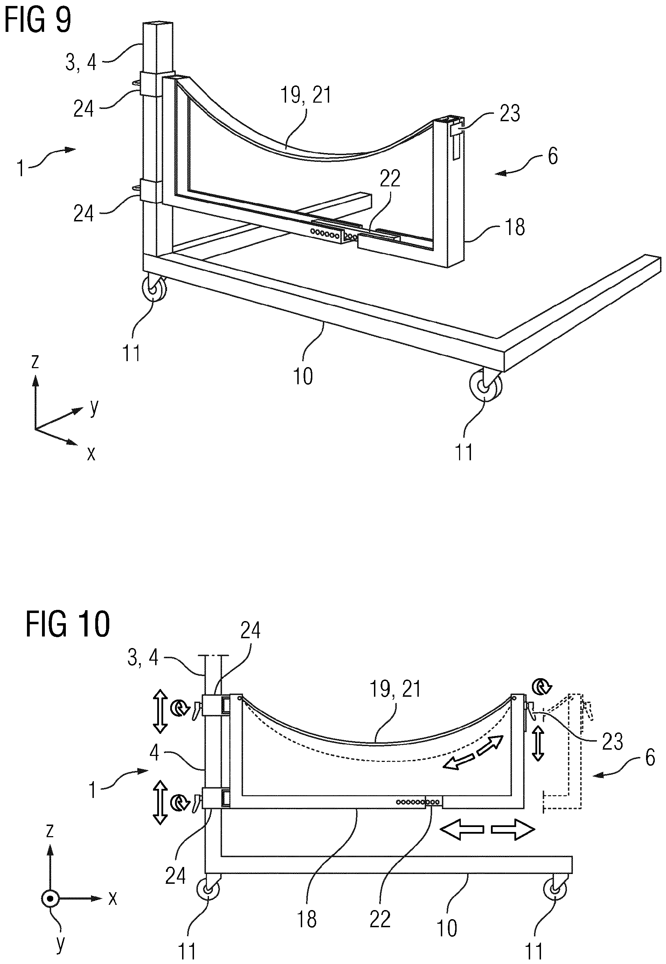

Next, a fifth embodiment of the rack 1 will be explained with the help of figures 9 and 10. In this embodiment, at least one of the holding arms 6 comprise the mounting device 18 and the supporting device 19, wherein the supporting device 19 is a carrying strap 21 which is attached to the frame or mounting device 18 at two positions. Hence, a part of the carrying strap 21 is sagging to constitute a flexible support area for the building elements 2. Instead of the carrying strap 21, the supporting device 19 can be a carrying wire.

As can be also seen from figures 9 and 10, the mounting device 18 is telescopically extendable via a telescopic rail 22. Hence, the holding arm 6 is adjustable in length. To adapt the length of the sagging part of the carrying strap 21 to the current length of the holding arm 6, the strap 21 can be adjusted by one of the attaching means which attaches the carrying strap 21 to the mounting device 18. The attaching means is a clamping device 23.

Instead of the carrying strap 21 a carrying wire can be provided, particularly comprising balls which can be rotated around the x-axis. Although the carrying wire and the balls which constitute a pearl necklace-like structure are not shown in the figures, these components fulfil the same purpose as the roller 17 which has been described with the help of fig. 3.

Still referring to figures 9 and 10, the holding arm 6 is attached to the holding structure 3 or vertical beam 4, respectively, by vertically shiftable clamping means 24. Hence, the vertical position of the holding arm 6 is adjustable. Thus, the number and geometry of reception planes 7 of the rack 1 is adjustable. This feature might also apply to the other embodiments described herein.

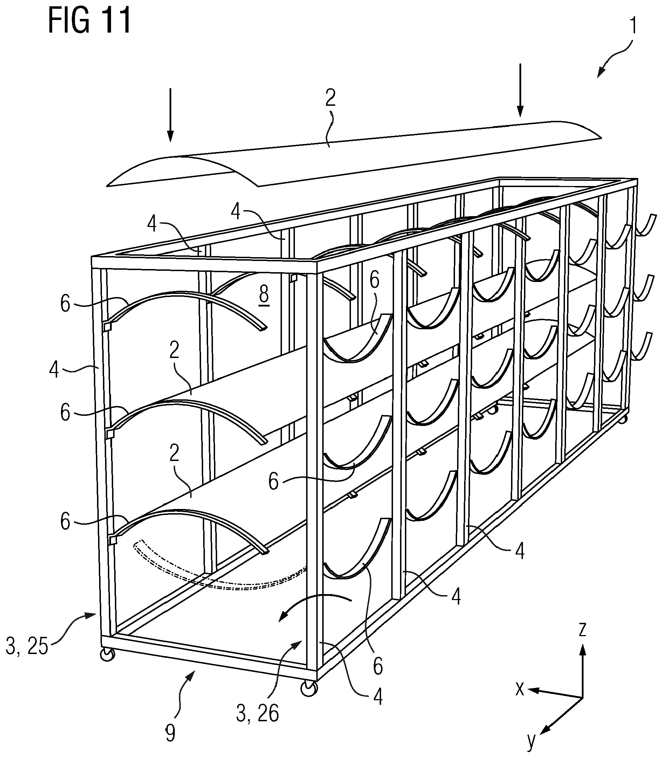

Fig. 11 shows a sixth embodiment of the rack 1, wherein the storing space 8 is located between two opposing holding structures 3, namely a first holding structure 25 and a second holding structure 26 which are attached to the transportation means 9 and run parallel to each other. The vertical beams 4 of the holding structures 25, 26 particularly oppose each other and are equally spaced. Each of the holding structures 25, 26 comprises holding arms 6 which are attached thereon and which can be moved from the holding position into the non-holding position and vice versa. Basically, the holding arms 6 can comprise the features of the embodiments as described before. In Fig. 11, a building element 2 is currently lowered into the rack 1 from above.

In the situation shown in fig. 11, the holding arms 6 of the first holding structure 25 are currently in the holding position, wherein the holding arms 6 of the second holding structure 26 are in the non-holding position. The holding arms 6 are shaped such that they constitute concave reception planes 7 when the holding arms 6 of the first holding structure 25 are in the holding position and convex reception planes 7 when the holding arms 6 of the second holding structure 26 are in the holding position.

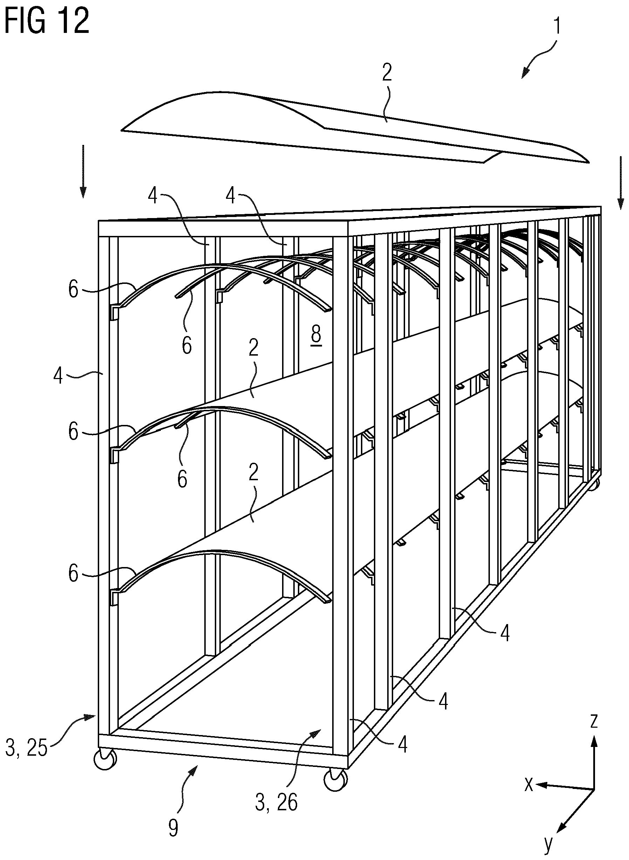

Fig. 12 shows a seventh embodiment of the rack 1 which is similar to the sixth embodiment of fig. 11. In the embodiment of fig. 12, however, the holding arms 6 of the first holding structure 25 and of the second holding structure 26 are bent equally such that the respective reception planes 7 can be used for concave building elements 2. Reception planes 7 for convex building elements 2 can be realized by moving the holding arms 6 from the first position, as displayed in fig. 12, into the second position by turning them around the horizontal axis 34.

While the vertical steel beams 4 oppose each other in the rack 1 of fig. 11, the vertical steel beams 4 are offset in rack 1 of fig. 12. Hence, the adjacent holding arms 6 of one row can be placed closer to each other in rack 1 of fig. 12 when being in the holding position.

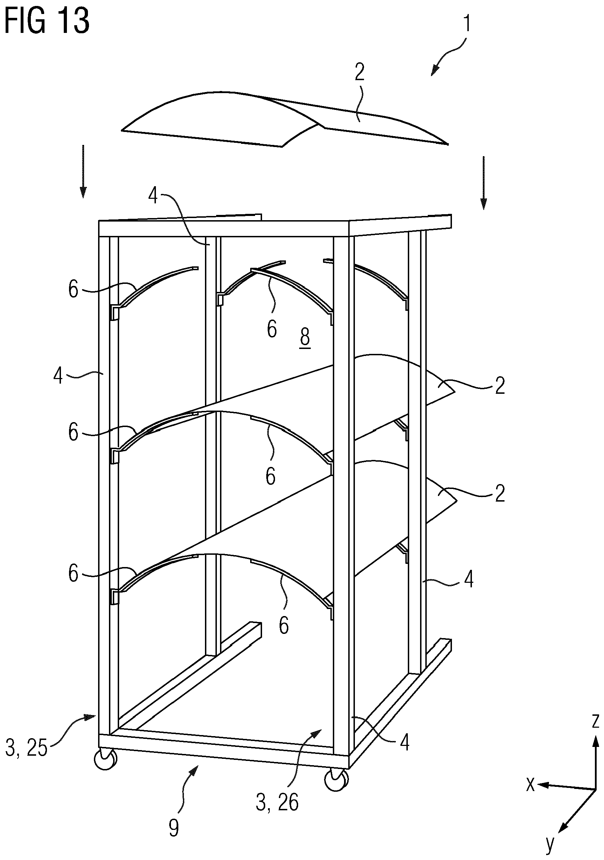

A rack 1 according to an eight embodiment is shown in fig. 13. This embodiment is similar to the embodiments of figures 11 and 12. However, in this embodiment, the holding arms 6 of the first holding structure 25 and the second holding structure 26 opposes each other and point towards each other when they are in the holding position. Hence, two opposed holding arms 6 constitute a virtual holding line which is more as twice as long as each of the actual holding arms 6. The vertical beams 4 of the holding structures 25, 26 oppose each other and are particularly equally spaced.

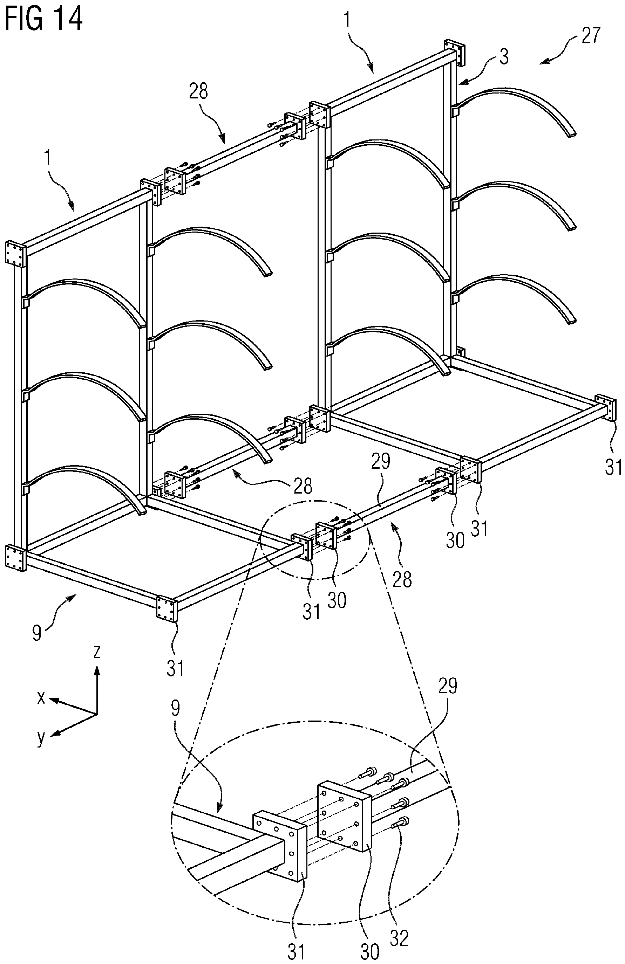

Fig. 14 shows an embodiment of a modular rack 27 according to the invention. The modular rack 27 comprises several racks 1 according to the present invention, particularly according to one of the embodiments as described above. Concretely, the modular rack 27 of fig. 14 comprises two racks 1 which are positioned laterally adjacent to each other and which are connectable to each other by connection means 28. The connection means 28 are horizontal connection beams 29 with connection plates 30 on their front ends. There are corresponding connection plates 31 which are attached on the holding structure 3 and the transportation means 9. The flange-like connection plates 30, 31 can be connected or attached to each other by screws 32 or other suitable attaching means.

Although the present invention has been described in detail with reference to the preferred embodiment, the present invention is not limited by the disclosed examples from which the skilled person is able to derive other variations without departing from the scope of the invention.

## Claims

1. Rack for transporting and/or storing building elements (2) which are used for building rotor blades of wind turbines, wherein the rack (1) comprises a holding structure (3) and several holding arms (6) which are attached or attachable to the holding structure (3), wherein the holding arms (6) are arranged offset in several rows when they are in a holding position in which they project from the holding structure (3) in a storage space (8) of the rack (1), wherein the holding arms (6) arranged in each row build a respective reception plane (7) for receiving at least one building element (2) extending over at least several of the holding arms (6) of this row, wherein at least two vertically staggered reception planes (7) are built, wherein at least one of the holding arms (6) which build an upper reception plane (7) is movable from the holding position into a non-holding position, in which the respective holding arm (6) is moved out of the storage space (8) above the reception plane (7) below the upper reception plane (7), and vice versa.

2. Rack according to claim 1, **characterized in that** the holding arms (6) are arranged in several horizontal rows and in several vertical rows when they are in the holding position.

3. Rack according to claim 1 or 2, **characterized in that** at least one of the holding arms (6) is movable from the holding position into the non-holding position and vice versa by pivoting it around a, particularly mainly vertical, axis (33).

4. Rack according to one of the preceding claims, **characterized in that** at least one of the holding arms (6) comprises at least two different, particularly differently shaped, surfaces (13, 14), wherein this holding arm (6) is movable from a first position into a second position by turning this holding arm (6) around a, particularly horizontal, axis (34), wherein the first surface (13) constitutes a support area for the building elements when this holding arm (6) is in the first position and the second surface (14) constitutes the support area when this holding arm (6) is in the second position.

5. Rack according to one of the preceding claims, **characterized in that** several exchangeable holding arms (6), particularly comprising differently shaped support areas for the building elements (2), are provided, wherein the holding arms (6) are detachably attachable to the holding structure (3).

6. Rack according to one of the preceding claims, **characterized in that** at least one of the holding arms (6) comprises a mounting device (18) and a supporting device (19) which is attached to or attachable to the mounting device (18) and which constitutes a flexible support area for the building elements (2).

7. Rack according to claim 6, **characterized in that** the supporting device (19) is at least partially made of an elastic material, particularly polyurethane foam, or it comprises a, particularly sagging, carrying strap (21) or carrying wire.

8. Rack according to one of the preceding claims, **characterized in that** at least one of the holding arms (6) comprises the or a mounting device (18), wherein several different, particularly differently shaped, supporting devices (19) are provided, which are detachably connectable with the mounting device (18).

9. Rack according to one of the preceding claims, **characterized in that** at least one of the holding arms (6) or the or a mounting device (18) of at least of one of the holding arms (6) is adjustable in length, particularly telescopically extendable.

10. Rack according to one of the preceding claims, **characterized in that** at least one of the holdings arms (6) comprises at least one roller (17) and/or at least one ball which constitutes a part of the support area for the building elements (2) .

11. Rack according to one of the preceding claims, **characterized in that** the holding structure (3) is a holding frame with several vertical beams (4), wherein the holding arms (6) are attached or attachable to the vertical beams (4).

12. Rack according to one of the preceding claims, **characterized in that** the vertical position of at least one of the holding arms (6) is adjustable, wherein this holding arm (6) is particularly attached or attachable on one of the vertical beams (4) by vertically shiftable clamping means (24).

13. Rack according to one of the preceding claims, **characterized in that** the storage space (8) is located between two opposing holding structures (3), wherein holding arms (6) are attached to a first holding structure (25) and holding arms (6) are attached to a second holding structure (26).

14. Rack according to one of the preceding claims, **characterized in that** the rack (1) comprises at least one transportation means (9) for relocating the rack, wherein the transportation means (9) is or comprises several wheels (11) for moving the rack (1) on a ground and/or a hoisting means, particularly a hook or a lug, adapted to be connected with a rope of a cane and/or a fork socket adapted to receive a fork of a forklift.

15. Modular rack comprising several racks (1) according to one of the preceding claims, **characterized in that** two laterally adjacent racks (1) are releasably connectable with each other by connection means (28).
